# EUROPEAN PATENT APPLICATION

(11) **EP 3 059 201 A1**
(43) Date of publication of application: **24.08.2016**
(21) Application number: 16156839.9
(22) Date of filing: 23.02.2016
(51) Int. Cl.: B66C 15/04, B66C 13/16, G01C 9/00, B66C 13/08, B66C 13/22

(54) **SPREADER BEAM**

(30) Priority: 23.02.2015 GB 201502971
(71) Applicant: Nissan Motor Manufacturing (UK) Ltd., Cranfield Bedfordshire MK43 0DB (GB)
(72) Inventor: MCLAUGHLIN, Steve, Sunderland, Tyne and Wear SR53NS (GB)

(57) **Abstract**

A spreader beam (40) for lifting a load, the spreader beam comprising: at least two load points (52), each load point being arranged to support a respective portion of the load; load detection means (64) arranged to output a signal indicative of the magnitude of individual loads applied to each of the load points when the load is supported; and slope detection means (62) arranged to output a signal indicative of an inclination of the spreader beam relative to a horizontal plane.

## Description

### Field of the Invention

The invention relates to spreader beams having two or more load points for lifting loads. In particular, but not exclusively, the invention relates to a crane system including a spreader beam for a manufacturing environment.

### Background to the Invention

Manufacturing environments often include cranes for lifting and placing heavy loads. Various problems can arise during crane operation, such as overloading of the crane, or snagging of a load or a crane hoist on surrounding apparatus during lifting or manoeuvring.

Some crane systems incorporate spreader beams that distribute attachment loading across two or more attachment points on the load, thereby reducing the loading at each attachment point compared with a single hoist. A respective hoist is provided for each attachment point, which raises the potential for problems to arise, and also introduces the potential for more complex issues. For example, if a hoist snags, the crane may continue to draw the remaining free hoists upwards. This can unbalance the load and lead to tilting and swaying, with unpredictable results. A similar situation arises if one or more of the hoists is not attached to the load correctly.

The consequences of continuing to operate a crane after a fault develops can be severe, including damage to the crane, the load and surrounding machinery, and also injury to personnel. It is therefore undesirable to rely on an operator to notice such problems arising and to intervene. Furthermore, cranes may be operated remotely via a user interface, or they may be fully automated as in a production line environment, leaving no opportunity for an operator to notice problems.

For this reason, crane load monitoring systems are sometimes implemented in an effort to detect problems as they arise. For example, US 5,152,183 describes a hoist arrangement including force transducers configured to detect excessive loading which may indicate that the hoist has snagged, or that an inappropriate load has been attached. As this arrangement relates to a single hoist, fault diagnosis is relatively straightforward: if the force transducer detects a higher than expected load, this must indicate that either the hoist or load has snagged, or the load that has been attached is too heavy.

As noted above, the faults that can arise in a crane system including a spreader beam are considerably more complex. The corrective action to be taken is dependent on the nature of the fault, and so it is important to accurately determine the precise cause of the problem.

One particular type of crane that is commonly found in a manufacturing environment is a gantry crane, in which a hoist is suspended from a crab that is mounted to a pair of parallel, horizontal girders. The girders terminate at each end at respective travel units that are in turn mounted to respective rails of a crane runway running orthogonal to the girders. The crab is able to move back and forth along the girders, while the travel units are operable to move the girders back and forth along the crane runway. In this way, the gantry crane system provides translational movement for a load attached to the hoist in two dimensions. This enables the crab to move items suspended on the hoist between two locations, for example two successive stages in a manufacturing path.

If a spreader beam is used with a gantry crane, the potential for problems to arise increases further. For example, in addition to the issues introduced above such as snagging of hoists during lifting, a hoist could snag during translational movement of the crab. Also, if the crab moves too quickly the load could begin to sway to an undesirable extent. Such problems are complex, in that they are influenced by several variables including: the position of the crab; the position of the load; the mass of the load; and the states of the hoists, i.e. whether one or more hoists has snagged or is not attached to the load.

In known systems, many of these variables cannot be detected automatically, even in isolation; it is therefore impossible to diagnose the precise nature and cause of complex problems accurately.

It is against this background that the present invention has been devised.

### Summary of the Invention

According to a first aspect of the invention, there is provided a spreader beam for lifting a load. The spreader beam comprises at least two load points, each load point being arranged to support a respective portion of the load. The spreader beam also comprises load detection means arranged to provide a signal indicative of the magnitude of individual loads applied to each of the load points when the load is supported, and slope detection means arranged to output a signal indicative of an inclination of the spreader beam relative to a horizontal plane.

By measuring the loading at each load point, the load detection means beneficially enables a comparison of the loading at each load point to determine a fault condition. For example, if there is a large discrepancy between two load points, this may indicate an imbalance caused by a snagged hoist or an incorrectly attached hoist.

Alongside this, it is noted that the spreader beam is typically expected to be substantially horizontal in normal operating conditions. Therefore, the slope detection means provides useful insight into the current condition of the spreader beam, in that it can provide an indication of whether the beam has deviated away from its expected orientation.

Each load point may comprise a respective load detection means. This provides a convenient configuration for gathering data for each load point.

The or each load detection means may comprise a load cell. The slope detection means may comprise one or more inclinometers. In each case, the arrangement conveniently makes use of readily available standard equipment.

The slope detection means may be arranged to provide a signal indicative of an inclination of the spreader beam in two orthogonal axes of the horizontal plane. This arrangement provides an accurate measurement of the tilt of the spreader beam in two dimensions. A two dimensional reading can be derived from two separate inclination measurements that are offset from each other at any angle, but the accuracy of the overall two dimensional model will typically be greatest when those measurements are taken in orthogonal axes.

The spreader beam may further comprise processing means arranged to analyse the output signals from the load detection means and/or the slope detection means to determine an operating condition of the spreader beam. This provides a self-contained arrangement requiring minimal external components, thereby enhancing the potential to retrofit the spreader beam to existing crane systems. In this embodiment, the processing means may comprise integrated sensor electronics arranged to receive and process output signals from the load detection means and/or the slope detection means.

The spreader beam may further comprise a battery configured to supply electrical power to the load detection means and/or the slope detection means, thereby increasing the portability of the spreader beam, enabling it to be shared between different crane systems, and reducing the demands placed on each crane system in terms of power supply.

In one embodiment, the spreader beam is cruciform in structure having four arms, in which case four load points are positioned on respective ones of the arms of the spreader beam, providing a structure that is inherently balanced and robust, and that enables distribution of loading over a wide area.

Each load point is preferably arranged to support a respective hoist for attachment to the load. Alternatively, it is possible for the spreader beam to be attached directly to the load.

The inventive concept also extends to a crane system for lifting a load. The crane system comprises a hoist, and a spreader beam according to the invention, the spreader beam being supported by the hoist. The crane system further comprises input means arranged to receive signals from the load detection means and the slope detection means, and processing means arranged to analyse the output signals from the load detection means and/or the slope detection means to determine an operating condition of the crane system.

By incorporating a spreader beam according to the invention into a crane system including processing means capable of handling the data generated by the sensing means of the spreader beam, the crane system is provided with the means to determine its operating condition in a wide range of circumstances. In particular, if a fault of one of the types described above develops, for example a snagging hoist, this can be detected by the crane system without operator input. Corrective action can then be taken immediately, thereby minimising the risk of damage to the crane system or surrounding equipment, and without requiring an operator to be in the immediate vicinity of the crane system, thereby reducing risk to personnel.

The crane system may further comprise sensing means arranged to output a signal indicative of the extent to which the hoist is raised. For example, the sensing means may comprise a draw wire encoder. The input means may be further arranged to receive signals from the sensing means, in which case the processing means is further arranged to use the output signal of the sensing means in the determination of the operating condition of the crane system. This arrangement provides further data that can be used to determine a fault condition, thereby enhancing the ability of the system to detect such conditions.

The input means may be arranged to receive the signals wirelessly, thereby increasing the flexibility of the physical configuration of the system.

The crane system may further comprise an interface module arranged to display to a user data derived from the signals received by the input means. This allows the user to view trends in the historical data for diagnostic purposes.

The crane system may be a gantry crane system comprising a crab movably mounted on a set of generally horizontal girders, in which case the hoist is supported by the crab. In this embodiment, the girders may be movably attached to a rail disposed orthogonally to the girders in a manner that permits movement of the girders along the rail. The gantry crane system may further comprise position detection means arranged to output signals indicative of a position of the crab in two dimensions. This arrangement provides further data that can be used to determine a fault condition, thereby enhancing the ability of the system to detect such conditions. The position detection means may comprise at least one laser sensor.

In a gantry crane system embodiment, the input means may be further arranged to receive signals from the position detection means, in which case the processing means is further arranged to use the output of the position detection means in the determination of the operating condition of the crane system.

It will be appreciated that preferred and/or optional features of the first aspect of the invention may be incorporated alone or in appropriate combination in the second aspect of the invention also.

### Brief Description of the Drawings

In order that the invention may be more readily understood, preferred non-limiting embodiments thereof will now be described, by way of example only, with reference to the accompanying drawings, in which like features are assigned like reference numbers, and in which:
Figure 1 is a schematic perspective view of a known gantry crane system that is suitable for use with and incorporation into embodiments of the invention;
Figure 2 is a perspective view of a spreader beam according to an embodiment of the invention as seen from above;
Figure 3 is a schematic front view of the spreader beam shown in Figure 2;
Figure 4 corresponds to Figure 3, but shows the spreader beam from the side;
Figure 5 corresponds to Figure 3, but shows the spreader beam from below;
Figure 6 is a simplified schematic view of a spreader beam according to an embodiment of the invention with a load attached;
Figure 7 is an enlarged side view of a load point of the spreader beam of Figure 2;
Figure 8 corresponds to Figure 7, but shows the load point in perspective view;
Figure 9 corresponds to Figure 7, but shows the load point from the front;
Figure 10 shows a fault detection system including the spreader beam of Figure 2, showing the physical hardware included in the system;
Figure 11 corresponds to Figure 10, but shows a sensor portion of the system in schematic form including inputs and outputs of the system;
Figure 12 corresponds to Figure 10, but shows a processing portion of the system in schematic form;
Figure 13 is a graph showing an example of fault condition tolerance parameters used by the fault detection system of Figure 10;
Figure 14 is a graph showing another example of fault condition tolerance parameters used by the fault detection system of Figure 10; and
Figures 15 to 20 show screenshots of a user interface of the fault detection system of Figure 10.

### Detailed Description of Embodiments of the Invention

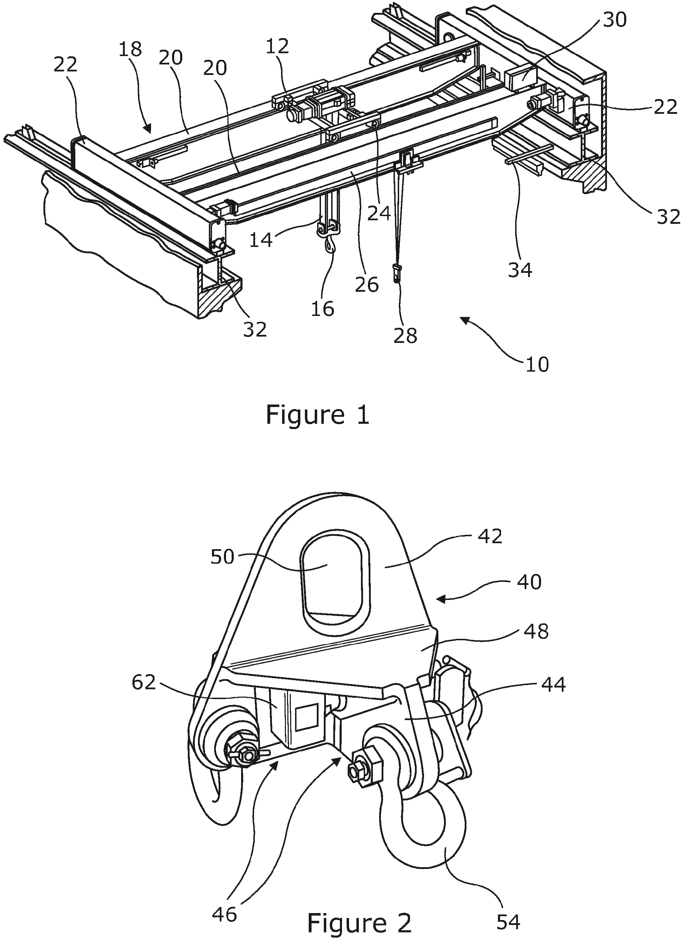

Figure 1 shows a conventional gantry crane system 10 that is suitable for use with embodiments of the invention. It should be appreciated that this crane system 10 is described for illustrative purposes only, and that embodiments of the invention can be used with a wide range of alternative crane systems.

The system includes a crab 12 from which a hoist 14 is suspended. The lower end of the hoist 14 includes an attachment means in the form of a hook 16, to which loads to be lifted and moved by the crane system 10 can be attached. Loads are either attached directly or, as described in more detail below, via an intermediate spreader beam. The hoist 14 can be drawn into the crab 12, corresponding to a lifting operation, and conversely the hoist 14 can be let out from the crab 12, corresponding to a lowering operation.

The crab 12 is supported by a gantry subassembly 18, which is defined by a pair of parallel girders 20 extending between a pair of parallel travel units 22 to form a rigid, generally oblong structure. The crab 12 straddles the girders 20, with each end of the crab 12 having a pair of wheels 24 resting on the upper surface of a respective girder 20. The wheels 24 are powered to enable the crab 12 to be driven back and forth along the girders 20 between the travel units 22, which is commonly referred to as 'cross travel'. Power is typically delivered to the crab 12 through a cable (not shown) that is supported by one of the girders 20, the cable being arranged to fold in a concertina-like manner as the crab 12 moves in one direction along the girder, and to unfold as the crab 12 moves in the opposite direction. The folding cable is attached to a power supply rail 26 that extends along a side of one of the girders 20.

A control pendant 28 dangles from one of the girders 20, to provide a connection point for cabling through which control signals are transmitted to control movement of the crab 12 and the gantry subassembly 18. Further electrical equipment is housed within a box 30 mounted at the end of the same girder. This equipment includes crane drives which are responsible for implementing movement of the crab 12, the gantry subassembly 18 and the hoist 14. The crane drives are simple drive circuits that are configured to supply electrical power to drive the crab or the gantry subassembly in response to control signals provided to the crane drives; the crane drives are not arranged to perform any sort of analysis of operating parameters in this embodiment.

The gantry subassembly 18 is mounted to a crane runway defined by a pair of horizontal rails 32. Each travel unit 22 is aligned with and supported by a respective rail 32, such that the girders 20 are disposed orthogonally to the rails 32. The crane runway also includes a connection point 34 for a power supply to provide power for the travel units 22. The travel units 22 are arranged to move along the rails 32 such that the gantry subassembly 18 moves back and forth along the crane runway. This is commonly referred to as 'long travel'.

In this way, the crab 12 can be moved in two dimensions for positioning at any location within an operating area defined by the width and length of the crane runway. Accordingly, the crab 12 is operable to move items between any two locations within the operating area, which may be, for example, successive stages in a manufacturing path.

The crane system 10 includes various sensing equipment that enables determination of the position of the crab 12 at all times. This in turn provides an indication of the location of any load supported on the hoist of the crab 12.

The sensing equipment includes a draw wire encoder that determines the extent to which the hoist 14 has been drawn in by the crab 12, which in turn indicates the height of the hook 16, and therefore the extent to which the load has been lifted.

The sensing equipment also includes two laser displacement sensing systems that are positioned so as to determine the extent of long travel and cross travel. A first laser sensing system includes a first sensor that is mounted at a fixed location beyond the end of the crane runway. The first sensor is arranged to direct a laser beam towards a first reflector positioned on a girder 20 of the crane gantry subassembly 18. The first laser sensor uses a reflected beam returning from the first reflector to determine the distance to the girder 20, which indicates the extent of long travel. A second laser sensing system includes a second sensor that is mounted on the one of the travel units 22. The second sensor cooperates with a second reflector that is positioned on the crab 12 to determine the extent of cross travel. Therefore, between them the first and second laser sensing systems are able to determine the precise location of the crab 12.

As will now be described, embodiments of the invention provide a spreader beam including sensing means to enable detection of fault conditions as they arise. The representative gantry crane system 10 described above is particularly suited for use with such a spreader beam, due to the common usage of such systems in manufacturing environments where it is desirable to detect faults automatically. As noted previously, the gantry crane system 10 also presents potential for the development of particularly complex fault conditions, and so is a good example on which to base the description of embodiments of the invention. However, as noted previously, spreader beams according to embodiments of the invention can be used with any type of crane system.

A first embodiment of the spreader beam 40 is shown from various angles in Figures 2 to 5. These figures will be described together.

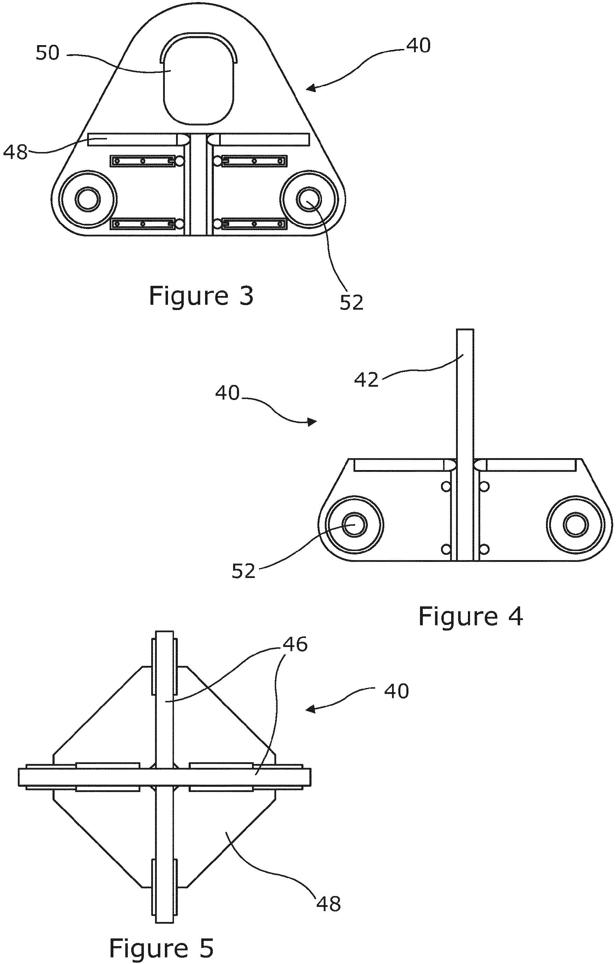

The spreader beam 40 is formed from a generally triangular central plate 42, with mutually opposed side plates 44 extending orthogonally away from a centreline of the central plate 42 in a vertical plane. As best seen in Figure 5, this arrangement creates a cruciform structure in a lower portion of the spreader beam 40, to define four arms 46.

Opposed, triangular flanges 48 extend laterally between an upper surface of each side plate 44 and the central plate 42 to brace the structure and increase rigidity. An exposed upper portion of the central plate 42 above the flanges 48 includes an aperture 50 for attachment to a coupling means such as the hook 16 of the gantry crane system 10 of Figure 1, to enable the spreader beam 40 to be suspended on a crane hoist.

As best seen in Figures 3 and 4, each arm 46 has an aperture disposed at its distal end that defines a load point 52. Accordingly, the spreader beam 40 of this embodiment has four load points 52 in total. A load can be attached to each load point 52 by any suitable means, and may be facilitated by a shackle 54 having its pin inserted through the aperture, as shown in Figure 2.

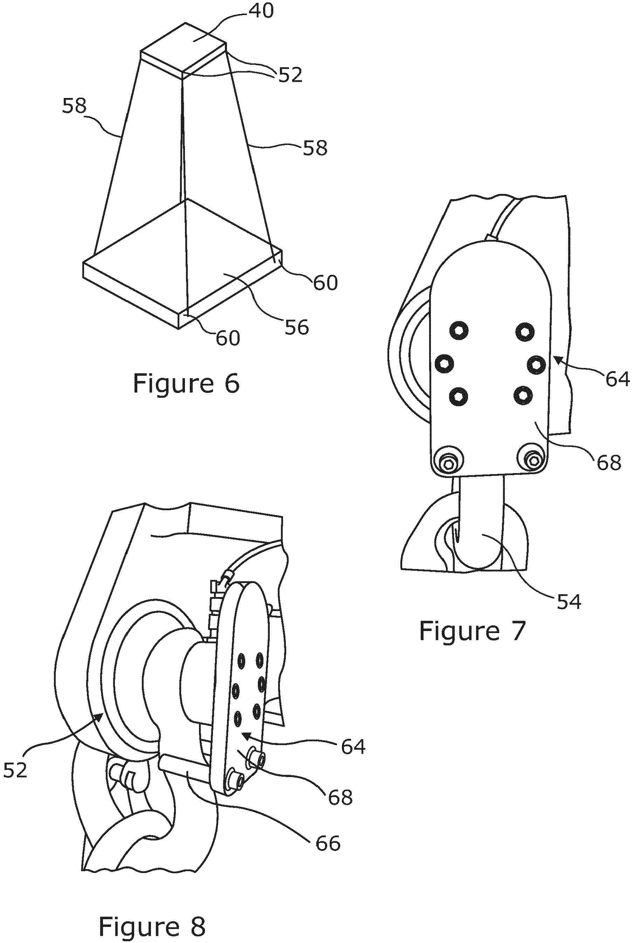

Figure 6 illustrates in simplified form a load 56 being lifted by the above described spreader beam 40. The spreader beam 40 is in turn supported by the hoist of a crane such as the gantry crane 10 of Figure 1, such that the crane lifts the load indirectly via the intermediate spreader beam 40. For simplicity, the crane system is omitted from Figure 6.

In this embodiment, a respective hoist 58 is suspended from each load point 52. Each of the hoists 58, at its lower end, is attached to the load 56 at an attachment point 60. Accordingly, there are four attachment points 60 on the load 56. In this way, the maximum loading at any of the attachment points 60 is significantly reduced compared with lifting the load 56 without a spreader beam 40 by a single attachment point. This reduces the risk of damage to the load 56, and also the risk of hoist failure.

However, the increased number of hoists 58 raises the potential for problems to arise. For example, as described earlier there is a higher risk of a hoist 58 snagging in a system with four hoists 58 compared with one having a single hoist. There is also increased potential for a hoist 58 to be attached incorrectly. In either case, the loading between the hoists 58 will become imbalanced, which can lead to tilting and/or swaying of the load 56. As noted previously, it is highly desirable to detect such problems as soon as possible, to avoid damage to equipment and also to reduce danger to operators.

To address this, the spreader beam 40 is provided with load sensing means that is able to detect individual loadings at each load point 52. In the embodiment shown in Figure 2, the sensing means comprises a sensor module 62 positioned beneath one of the flanges, the sensor module 62 being composed of sensor electronics contained within a housing.

Specifically, the sensor module 62 contains circuitry that is configured to process raw sensor output data signals from the sensing means so as to convert them into signals that can be recognised by other devices. The circuitry may also include amplification and filtering to improve signal quality. In this embodiment, the sensor module 62 also houses part of the sensing means, for example one or more inclinometers, as will be described below. This provides a compact arrangement that reduces installation time. The sensor module 62 further includes a wireless transmitter that is arranged to transmit the converted sensor output signals to a control module for analysis. Finally, the sensor module 62 includes a battery that provides electrical power for the sensing means and the transmitter. In this way, the sensing means of the spreader beam 40 is self-contained and self-powered, conveniently disposing with the need for any form of wired connection to the spreader beam 40. This is a clear advantage in a gantry crane system with movement in three axes within a manufacturing environment, in which additional wires may become easily entangled or snagged on surrounding equipment.

In normal operating conditions, the loadings are expected to be substantially balanced across the load points 52. However, if a fault occurs, one or more load points 52 will experience a sudden and unexpected increase or decrease in loading. As the sensing means is able to monitor each load point 52 individually, sudden changes at any of the load points 52 can be detected and used to trigger an alert to a fault condition. The alert can then be used to implement corrective action to prevent damage to equipment and danger to personnel.

It is noted that when a load 56 is initially lifted there is a period of instability during which the hoists 58 successively become taut as the spreader beam 40 rises and orients to the horizontal plane; the load 56 should only lift once all hoists 58 are taut. This is accounted for when processing data provided by the sensing means, to avoid false alarms.

In one embodiment, shown most clearly in Figures 7 to 9, the sensing means comprises load detection means in the form of load cells 64. These figures show a load point 52 in close-up such that a load cell 64 associated with the load point 52 is clearly visible. In this embodiment, the load cell 64 is integral with the shackle pin. As the location of the shackle pin with respect to the load point 52 is fixed, the load cell 64 can use this point as a datum. Beneath the shackle pin, two load pins 66 extend away from a main body 68 of the load cell 64 to bear against the shackle 54, with one load pin 66 on each side of the shackle 54. When a load 56 induces a strain in the shackle 54, this in turn applies pressure to the load pins 66. The load cell 64 includes a strain gauge arrangement that converts the pressure applied to the pins 66 into a signal indicative of the load on the shackle 54. The load cell 64 is otherwise entirely conventional, and the skilled reader will appreciate that various forms of load cell could be used in this application.

It is noted that each shackle 54 has a respective load cell 64, such that the sensing means comprises four load cells 64 in this embodiment. Accordingly, four signals are produced to indicate the load at each load point 52. These signals are passed to the sensor module 62 through a wire. The sensor module 62 includes amplifiers to amplify the signals. The amplified signals are then forwarded to a control module for processing. The control module does not form part of the spreader beam 40 and so will be described later.

The output signals from the load detection means can be used to provide a first indication of a fault condition in the spreader beam 40. However, the sensing means is also arranged to provide a second indication of a fault by way of slope detection means in the form of an inclinometer, which is situated in the sensor module 62. In this embodiment, the inclinometer measures tilting of the spreader beam 40 in two axes to provide a robust indication of the orientation of the spreader beam 40.

During a fault condition such as snagging of a hoist 58, it is likely that the spreader beam 40 will suddenly tilt away from a generally horizontal orientation. Such movement can be detected by the inclinometer and can be taken to indicate a fault. The direction in which the spreader beam 40 tilts will vary depending on which hoist 58 snags or is incorrectly attached. Therefore, the inclinometer is arranged to measure the tilt of the spreader beam 40 in all directions by resolving tilt measurements in each of the two axes.

Both the tilt of the spreader beam 40 and the individual loading at each load point 52 can be indicative of a fault condition. As the spreader beam 40 includes means for monitoring each of these parameters, more robust fault detection can be implemented by comparing both sets of data, namely load data and tilt data. However, it should be appreciated that in other embodiments only one type of sensing means is included for fault detection.

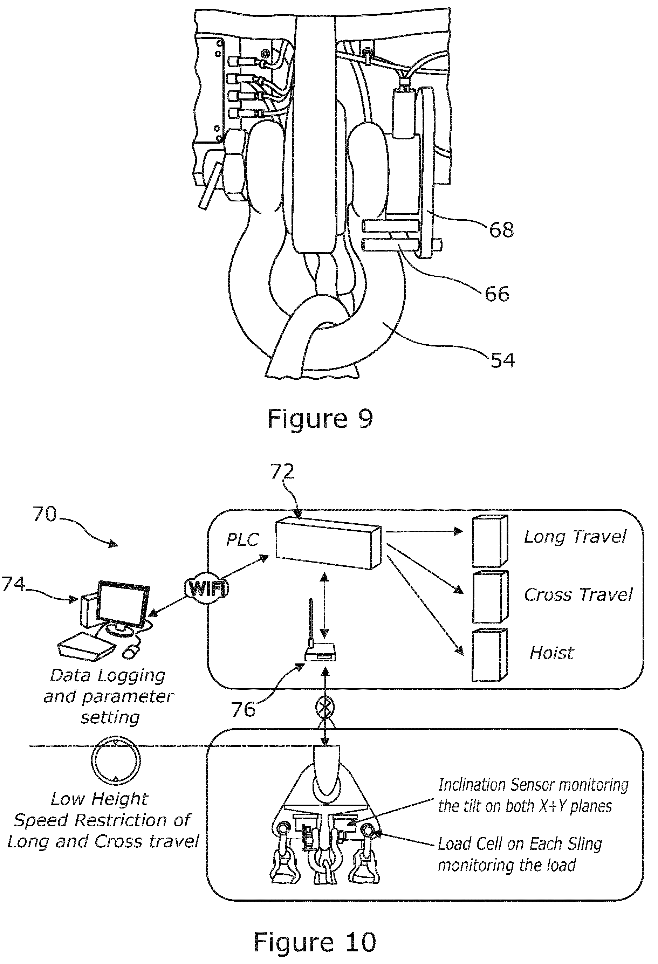

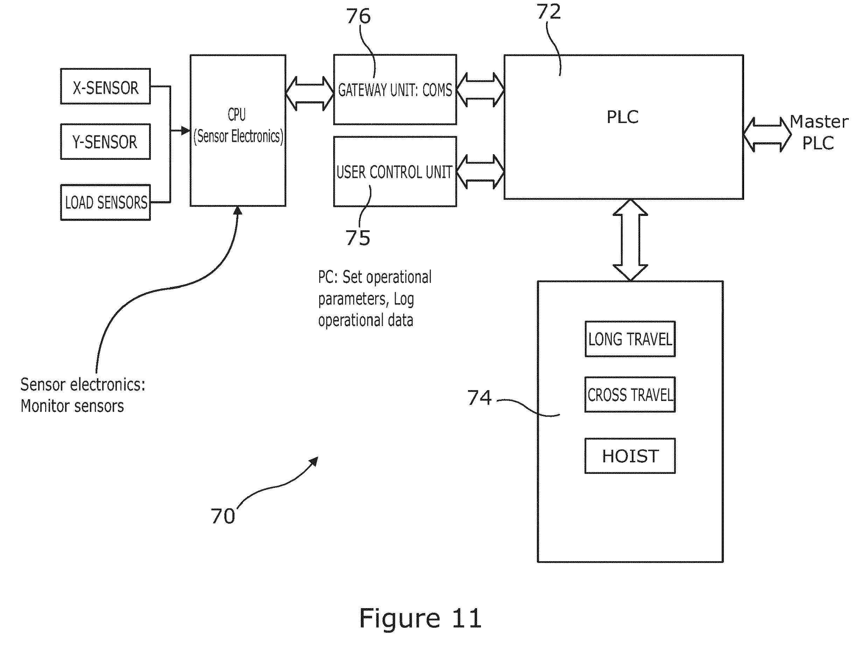

Moving on now to Figures 10 and 11, a control architecture 70 for the above gantry crane system 10 is illustrated. The architecture 70 is shown pictorially in Figure 10, and schematically in Figure 11.

In this embodiment, the control module takes the form of a programmable logic controller (PLC) 72 that is arranged to collect output signals from the various sensors of the crane system 10, and to analyse those signals to determine a fault condition. The PLC 72 may, for example, be carried on a girder 20 of the gantry subassembly 18. In such an arrangement, processed signals and fault alerts are sent through the control pendant 28 to a computer 74, which logs the data. The computer 74 also provides a user interface (UI) configured to present fault condition alerts to an operator, and to enable the operator to view historical data and to adjust operating parameters such as a maximum lifting speed and height restrictions. The UI also provides a level of control that enables the operator to perform specific actions, such as stopping and shutting down the crane 10. A user control unit 75 is also provided that enables the operator to input commands manually to control the crane system. These commands are transmitted to the PLC 72, which implements them in accordance with system operating parameters.

The PLC 72 is also arranged to control the crane 10 in response to control signals received from the computer 74 in combination with commands received from the user control unit 75 and the sensor output signals. The control signals indicate the operating parameters for the crane system 10 as defined by the operator through the UI. Alongside this, the PLC 72 analyses the sensor output signals to determine fault conditions in accordance with parameters defined by the operator. In the event of a fault condition, the PLC 72 is arranged to override the control signals to implement corrective action.

In an alternative embodiment in which more than one crane system 10 is controlled over a common network, each crane system 10 has a respective slave PLC 72 that is arranged to communicate with a master PLC 72. The master PLC 72 is arranged to receive sensor output signals from each of the slave PLCs 72, and to process the signals to detect fault conditions. Meanwhile, each slave PLC 72 implements control of its respective crane system 10 in accordance with control signals received from the master PLC 72. Therefore, in this arrangement processing of sensor output signals for fault detection is centralised in the master PLC 72. This provides an efficient arrangement in which changes to operating parameters can be implemented centrally and therefore quickly.

In this embodiment, the sensing means of the spreader beam 40 communicates wirelessly with the PLC 72, for example using Bluetooth®. The wireless signals are created and broadcast by the transmitter of the sensor module 62, and are received by a wireless receiver 76 connected to the PLC 72. Separately, signals from the sensing equipment of the gantry system 10, such as the draw wire encoder and the laser displacement sensing systems, are sent through a wired connection to the PLC 72. The signals are sent using an industrial network protocol such as Profibus.

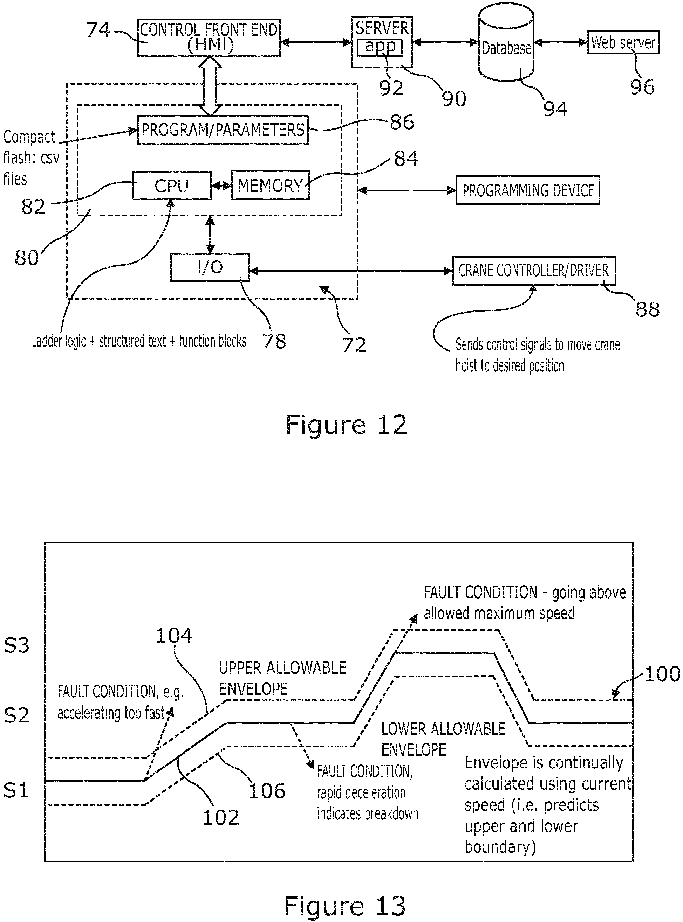

Figure 12 shows the internal architecture of the PLC 72, along with functional modules of the computer 74 with which the PLC 72 communicates. As illustrated, the PLC 72 includes an input/output (I/O) module 78, and a processing module 80 including a central processing unit (CPU) 82, a random access memory (RAM) module 84, and a non-volatile memory module 86 such as a Compactflash memory. One or more control programs or algorithms are stored in the non-volatile memory 86, along with the operating parameters. As shown, a control front end including a human-machine interface (HMI), namely the computer 74, has both read access and write access to the non-volatile memory 86, enabling adjustment of the operating parameters and the control programs, as well as enabling direct control of the crane 10 through the PLC 72.

The I/O module 78 is in communication with a crane controller 88 such as the crane drive described above. Control signals generated by the processing module 80 or by an operator through the UI are sent to the crane drive from the I/O module 78 to effect movement of the crane 10. The I/O module 78 also reads data from the crane drive, as is standard in drive systems of this nature, the data primarily being gathered for diagnostic purposes.

The computer 74 is connected to a server 90 through a local network. An application 92 runs on the server 90 that receives and stores operating data for the crane system 10 in a database 94. The database 94 is also accessible by a web server 96, which enables a web-based implementation of the system which conveniently makes use of readily available telecommunications infrastructure, and also creates the potential to centralise control of multiple dispersed systems if required. The inclusion of the database 94 allows historical operating data to be stored for subsequent analysis, for example for diagnostic purposes. Figure 13 illustrates a typical operating envelope 100 for the crane system 10 which can be used to determine a fault condition. The graph shows the crane moving at three distinct steady state speeds, S1 to S3, corresponding to the horizontal portions of the graph. These are discrete operational speeds of the crane system 10, and could relate to either vertical or translational movement. The angled portions of the graph correspond to periods of acceleration or deceleration between the set operational speeds. The solid central line 102 of the graph represents the intended travel profile, while the upper and lower dashed lines 104, 106 represent the acceptable deviation from the intended profile, to define an allowable envelope 100. The acceptable deviation is calculated to account for the characteristics of the crane system, such as the power of the crane drives and the system inertia, as well as the size, shape and mass of a load 56 to be moved by the crane 10. The performance of the control system in terms of overshoot, undershoot and linearity is also taken into account. It should be appreciated that the allowable envelope 100 is determined dynamically to account for varying demands placed on the system: although the crane system 10 may be used in a repetitive and predictable manner in a production environment, typically crane systems 10 are at least occasionally required to undertake non-routine operations for which the allowable envelope 100 cannot be determined in advance. For example, the crane operator may wish to move an object between two non-routine locations, to lift an unusually heavy object, or to move more quickly than usual. For this reason, the envelope 100 is determined in real-time, taking into account all instantaneous operating parameters.

The data shown in the graph may conveniently be derived from the sensing equipment provided with the gantry crane system 10, namely the x and y laser displacement sensing systems and the draw wire encoder.

Deviation will occur if the crane 10 moves at an incorrect steady state speed, or if it accelerates too quickly or too slowly. In either case, deviation outside the allowable envelope 100 is likely to be a sign of a developing problem, such as snagging of a hoist 58 or incorrect attachment of the load 56. Rapid deceleration may be indicative of a breakdown. Therefore, any deviation outside the allowable envelope 100 is treated as indicative of a fault condition, and an alert is generated and displayed to the operator, who can then take corrective action. Alternatively, in certain fault conditions the crane system 10 can implement corrective action automatically, which is simply reported to the operator. Examples of corrective action that the crane system 10 can take include: slowing movement of the crab 12, the hoist 14 or the gantry subassembly 18; stopping movement of the load 56 altogether; or stopping and then moving in a reverse direction, for example by lowering a hoist 14 that was rising when a fault occurred.

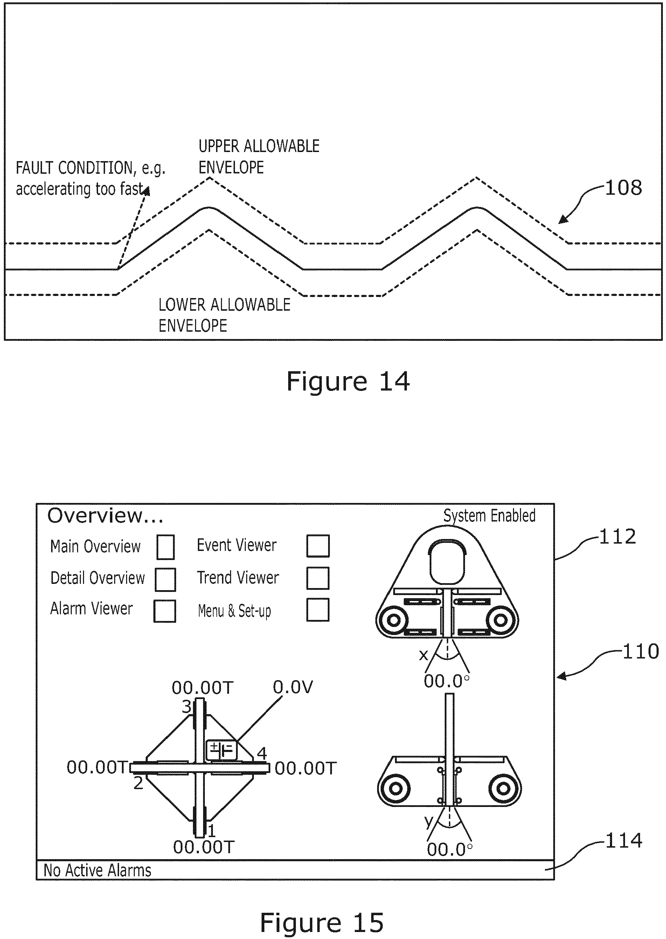

Acceptable tolerances are also applied to the instantaneous loadings reported at each load point 52 of the spreader beam 40, and this is shown in Figure 14. As with the speed data in Figure 13, an allowable envelope 108 is applied to the load data to define fault conditions. The load at each load point 52 is expected to be consistent throughout a crane movement, except during periods of acceleration or deceleration where the load increases or decreases accordingly as noted above. A filter may be applied when a load 56 is initially lifted, where individual loads may be very high for short periods as each hoist 58 successively jolts taut. It is noted that the load response profile may follow a more curved path than the relatively linear path depicted in Figure 14. It should also be noted that the load response profile shown in Figure 15 is not intended to correspond to the speed profile of Figure 14.

Figure 15 is a screenshot of a UI 110 that is suitable for use with the crane system 10. It should be appreciated that the UI 110 shown is entirely representative and could vary considerably in design and implementation. The screenshot is of a "Main Overview" screen 112 that an operator would typically monitor. This screen includes graphical representations of the spreader beam 40 from various perspectives, and shows instantaneous measurements for each of the load cells, as well as the inclinometers, all of which update in real-time.

A status bar 114 extends along a bottom edge of the screen 112, which serves as a primary means of communicating an alert to the operator. In Figure 15 the bar 114 is green, indicating that no faults have been detected and the crane 10 is operating within acceptable limits. On detection of a fault condition, the status bar 114 will change colour to alert the operator visibly, with alerts graded from yellow to amber and through to red according to the severity of the fault.

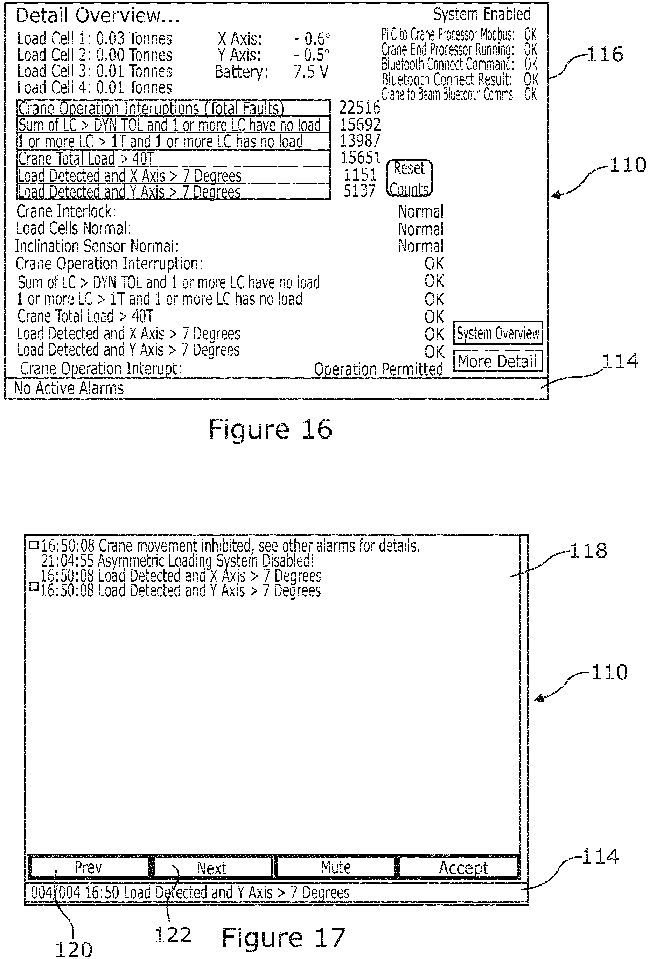

The operator can navigate between six main screens by clicking one of six corresponding icons in the upper left corner of the screen. In this embodiment, the available screens are: "Main Overview", which is the screen that is selected in Figure 15; "Detail Overview"; "Alarm Viewer"; "Event Tracker"; "Trend Viewer"; and "Menu & Set-up". It should be noted that the status bar 114 appears on all screens such that the operator is alerted to faults irrespective of which screen is displayed. Each of the screens will now be briefly described with reference to Figures 16 to 20.

As shown in Figure 16, the "Detail Overview" 116 includes textual data showing the same measurements for the load cells and the inclinometers as is available on the "Main Overview" screen 112. In addition, this screen 116 lists the status of various other elements of the crane system 10, as well as a summary of historical crane operation data.

The "Alarm Viewer" 118, shown in Figure 17, lists recent alarm events, including a brief description of each alarm. This screen includes a "previous" button 120 and a "next" button 122 to enable the operator to navigate a series of alarm viewer screens to see historical alarms.

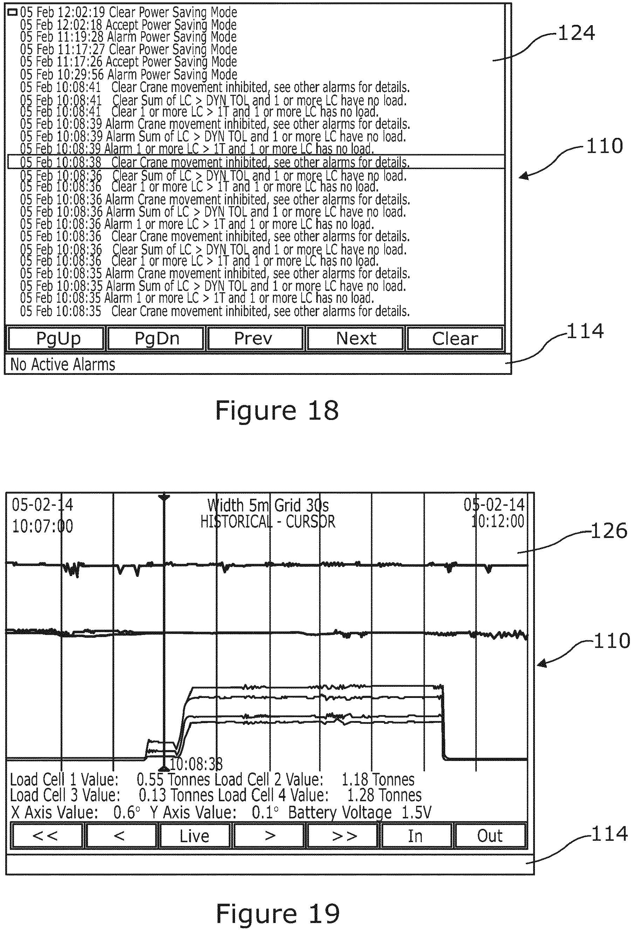

Figure 18 shows the "Event Viewer" screen 124, which is similar in format to the "Alarm Viewer" screen 118 but includes a more comprehensive list of events including crane operations and status updates in addition to alarm events.

The "Trend Viewer" screen 126 shown in Figure 19 charts the load cell and inclinometer data over a pre-defined period, for example 5 minutes. This enables the operator to see trends in the spreader beam data, which allows for detection of more subtle problems that may not be detected by the software, for example an unexpected distribution of loads around the load points 52 of the spreader beam 40. This therefore increases the ability of the system to enable remote identification of fault conditions in the crane system 10.

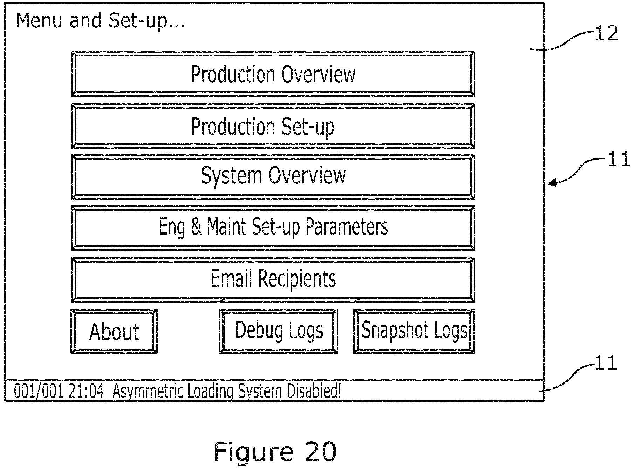

The "Menu & Set-up" screen 128 in Figure 20 includes buttons that allow the operator to navigate to various sub-screens in order to adjust operating parameters and perform other functions. These features broadly correspond to set-up menus for similar UI software that will be familiar to the skilled person, and so are not described further here.

The above described UI 110 provides the operator with everything necessary to monitor the status of the crane system 10 to ensure that it is operating correctly. In this way, the UI 110 together with the control system allow remote fault detection for the gantry crane system 10, therefore enabling rapid implementation of corrective action to prevent damage to the crane 10, the load 56, and surrounding equipment, whilst removing the operator from the vicinity of the crane 10 to avoid danger. The variety of faults that can be detected automatically is greatly enhanced through the inclusion of the spreader beam sensing means, namely the load cells and the inclinometers, thereby maximising the effectiveness of fault detection and correction.

It will be appreciated by a person skilled in the art that the invention could be modified to take many alternative forms to that described herein, without departing from the scope of the appended claims.

For example, while the spreader beam described above is cruciform in structure with four load points, many other structures are possible, including a simple beam with a load point at each end. A respective load cell for each load point can still be provided in any variation, and similarly the inclinometers can be utilised in the same manner as described above.

## Claims

1. A spreader beam (40) for lifting a load, the spreader beam comprising:
at least two load points (52), each load point being arranged to support a respective portion of the load;
**characterised in that** there is provided a load detection means arranged to output a signal indicative of the magnitude of individual loads applied to each of the load points when the load is supported; and
slope detection (62) means arranged to output a signal indicative of an inclination of the spreader beam relative to a horizontal plane.

2. A spreader beam (40) according to claim 1, wherein each load point (52) comprises a respective load detection means.

3. A spreader beam (40) according to claim 1 or claim 2, wherein the or each load detection means comprises a load cell (64).

4. A spreader beam (40) according to any preceding claim, wherein the slope detection means is arranged to provide a signal indicative of an inclination of the spreader beam in two orthogonal axes of the horizontal plane.

5. A spreader beam (40) according to any preceding claim, wherein the slope detection means comprises one or more inclinometers (62).

6. A spreader beam (40) according to any preceding claim, further comprising processing means arranged to analyse the output signals from the load detection means and/or the slope detection means to determine an operating condition of the spreader beam.

7. A spreader beam (40) according to claim 6, wherein the processing means comprises integrated sensor electronics arranged to receive and process output signals from the load detection means and/or the slope detection means.

8. A spreader beam (40) according to any preceding claim, further comprising a battery configured to supply electrical power to the load detection means and/or the slope detection means.

9. A spreader beam (40) according to any preceding claim, wherein the spreader beam is cruciform in structure having four arms, and wherein four load points are positioned on respective ones of the arms of the spreader beam.

10. A spreader beam (40) according to any preceding claim, wherein each load point is arranged to support a respective hoist (58) for attachment to the load.

11. A crane system (10) for lifting a load, the crane system comprising:
a hoist (58);
a spreader beam (40) according to any preceding claim, the spreader beam being supported by the hoist;
input means arranged to receive signals from the load detection means and the slope detection means; and
processing means arranged to analyse the output signals from the load detection means and/or the slope detection means to determine an operating condition of the crane system.

12. A crane system (10) according to claim 11, further comprising sensing means arranged to output a signal indicative of the extent to which the hoist is raised.

13. A crane system (10) according to claim 12, wherein the sensing means comprises a draw wire encoder.

14. A crane system (10) according to claim 12 or claim 13, wherein the input means is further arranged to receive signals from the sensing means, and wherein the processing means is further arranged to use the output signal of the sensing means in the determination of the operating condition of the crane system.

15. A crane system (10) according to any one of claims 11 to 14, wherein the input means is arranged to receive the signals wirelessly.

16. A crane system (10) according to any one of claims 11 to 15 further comprising an interface module arranged to display to a user data derived from the signals received by the input means.

17. A crane system (10) according to any one of claims 11 to 16, wherein the crane system is a gantry crane system comprising a crab (12) movably mounted on a set of generally horizontal girders (20), and wherein the hoist (14) is supported by the crab.

18. A crane system (10) according to claim 17, wherein the girders are movably attached to a rail disposed orthogonally to the girders in a manner that permits movement of the girders along the rail.

19. A crane system (10) according to claim 17 or claim 18, further comprising position detection means arranged to output signals indicative of a position of the crab (14) in two dimensions.

20. A crane system (10) according to claim 19, wherein the position detection means comprises at least one laser sensor.

21. A crane system (10) according to claim 19 or claim 20, wherein the input means is further arranged to receive signals from the position detection means, and wherein the processing means is further arranged to use the output of the position detection means in the determination of the operating condition of the crane system.
